# EUROPÄISCHE PATENTSCHRIFT

(11) **EP 2 404 044 B1**
(45) Veröffentlichungstag und Bekanntmachung des Hinweises auf die Patenterteilung: **23.01.2013**
(21) Anmeldenummer: 10707827.1
(22) Anmeldetag: 27.02.2010
(51) Int. Cl.: F01N 3/20, B60K 15/035

(54) **BETRIEBSFLÜSSIGKEITSBEHÄLTER**
SERVICE FLUID CONTAINER
RÉSERVOIR DE LIQUIDE DE FONCTIONNEMENT

(30) Priorität: 06.03.2009 DE 102009011516
(43) Veröffentlichungstag der Anmeldung: 11.01.2012
(73) Patentinhaber: Kautex Textron GmbH & Co. KG, 53229 Bonn (DE)
(72) Erfinder: KOLBERG, Ralf, 50321 Brühl (DE); MAGLOVSKY, Jaroslav, 53797 Lohmar (DE); SCHWÄR, Robert, 01139 Dresden (DE); TREUDT, Volker, 51570 Windeck (DE)
(74) Vertreter: Polypatent
(86) Internationale Anmeldenummer: PCT/EP2010/001229
(87) Internationale Veröffentlichungsnummer: WO 2010/099907

(56) Entgegenhaltungen:
- EP-A1- 2 006 503
- EP-A2- 1 149 722
- DE-A1- 2 509 428
- FR-A1- 2 774 951

## Beschreibung

Die Erfindung betrifft einen Betriebsflüssigkeitsbehälter für ein Kfz, insbesondere einen Reduktionsmittelbehälter zur Aufnahme eines flüssigen Reduktionsmittels zur katalytischen Abgasentstickung. Bei der Abgasreinigung von Dieselfahrzeugen findet häufig das sogenannte SCR-Verfahren Anwendung, vor allen Dingen bei Nutzfahrzeugen. Als SCR bezeichnet man die selektive katalytische Reduktion, bei welcher Stickoxide mittels Ammoniak reduziert werden. Der benötigte Ammoniak wird hierbei beispielsweise in Form einer wässrigen Harnstofflösung vor dem SCR-Katalysator in den Abgasweg eingespritzt. Aus der Harnstoff-Wasserlösung wird durch eine Hydrolyse-Reaktion Ammoniak und Kohlendioxid erzeugt. Das Ammoniak kann in einem Katalysator bei entsprechender Temperatur mit den Stickoxiden im Abgas reagieren.

Üblicherweise wird bei dem betreffenden Fahrzeug ein Reduktionsmittelbehälter für den in wässriger Lösung vorliegenden Harnstoff vorgesehen. Der Harnstoff setzt Ammoniak frei, was zu unangenehmen Geruchsemissionen führen kann. Die Austrocknung der Lösung geht mit einem starken Kristallwachstum und einer Volumenzunahme einher. Daher müssen im Kraftfahrzeug mitgeführte Reduktionsmittelbehälter gegen Austrocknen gesichert sein. Bekannte Reduktionsmittelbehälter sind mit einem Druckausgleichselement verschlossen, welches einen Gasaustausch bedingt zulässt, den Behälter jedoch flüssigkeitsdicht verschließt. Die Druckausgleichselemente bei bekannten Betriebsflüssigkeitsbehältern umfassen beispielsweise Sinterdeckel, die einen Gasaustausch zulassen, gegen Flüssigkeit jedoch undurchlässig sind. Auch ist es bekannt, Druckausgleichselemente in Form von Rückschlagventilen vorzusehen. Insbesondere Druckausgleichselemente mit Stopfen aus Sintermaterialien sind in ihrer Funktion beeinträchtigt, wenn sie von einer Flüssigkeit benetzt werden.

Bekannte Reduktionsmittelbehälter sind nicht zuletzt aus diesem Grunde nur bedingt für den Einsatz in Geländefahrzeugen geeignet. Bei Geländefahrzeugen wird häufig eine bestimmte Watfähigkeit gefordert, wobei nicht ausgeschlossen ist, dass wesentliche Teile des Fahrzeugs zumindest kurzfristig unterhalb des Wasserspiegels des zu durchwatenden Gewässers gelangen. Bei bekannten Konstruktionen von SCR-Behältern ist die Watfähigkeit nur bedingt gegeben.

Aus der DE 25 09 428 A ist eine Vorrichtung zur Entlüftung eines Kraftstoffbehälters bekannt, bei der in der Entlüftungsleitung des Kraftstoffbehälters ein Filterkörper aus einem feinporigen Sintermetall angeordnet ist, der bei Überschlag des Kraftfahrzeuges verhindern soll, dass Kraftstoff ausläuft und im Normalbetrieb das Entlüften des Kraftstoffbehälters in einen Aktivkohlefilter gewährleistet.

Aus der EP 1 149 722 A2 ist eine Entlüftungseinrichtung für einen Kraftstoffbehälter bekannt, welche ein Schwallschutzelement als poröses, aus gesintertem Kunststoff gefertigtes Bauteil aufweist.

Ein Kraftstoffbehälter mit einem solchen Verschlusskörper in einer Entlüftungsleitung ist beispielsweise auch aus der FR 2 774 951 bekannt.

Ein anderer Kraftstoffbehälter ist beispielsweise aus der EP 2 006 503 A1 bekannt.

Der Erfindung liegt daher die Aufgabe zu Grunde, einen Betriebsflüssigkeitsbehälter, insbesondere einen Reduktionsmittelbehälter zur Aufnahme eines flüssigen Reduktionsmittels zur katalytischen Abgasentstickung bereitzustellen, der für den Einsatz in einem watfähigen Fahrzeug geeignet ist und dessen Funktionsfähigkeit auch im Watbetrieb sichergestellt ist.

Die Aufgabe wird gelöst mit den Merkmalen des unabhängigen Anspruchs 1. Vorteilhafte Ausgestaltungen der Erfindung ergeben sich aus den Unteransprüchen.

Die Erfindung umfasst einen Betriebsflüssigkeitsbehälter für ein Kfz, insbesondere durch einen Reduktionsmittelbehälter zur Aufnahme eines flüssigen Reduktionsmittels zur katalytischen Abgasentstickung, umfassend wenigstens eine Einrichtung zur Entlüftung des Behälters, die mit wenigstens einem Druckausgleichselement verschlossen ist, welches einen Gasaustausch zulässt, den Behälter jedoch flüssigkeitsdicht verschließt, und umfassend wenigstens eine Entlüftungsleitung, die mit dem Druckausgleichselement kommuniziert, wobei die Entlüftungsleitung in Einbaulage des Behälters wenigstens bis oberhalb des maximal zulässigen Watniveaus oberhalb des Behälters geführt ist und wobei die Entlüftungsleitung wenigstens einen ersten abschüssigen Leitungsabschnitt aufweist, der sich in einen zweiten steigenden Leitungsabschnitt zur Entlüftung und in einen dritten fallenden Leitungsabschnitt zur schwerkraftbedingten Kondensatdrainage verzweigt.

Erfindungsgemäß wird hierdurch eine zuverlässige Entlüftung gewährleistet, auch wenn der Reduktionsmittelbehälter sich unterhalb des Wasserspiegels befindet. Gleichzeitig wird aber auch sichergestellt, dass die Entlüftungsleitung von Kondensat freigehalten wird, eine Kondensatbildung in einer steigend verlegten Leitung würde nämlich unter Umständen zum Verstopfen der Entlüftungsleitung führen. In der Leitung kondensiertes Wasser kann sich bei einer steigend verlegten Leitung im Bereich des Druckausgleichselements ansammeln und dort die Ventilation behindern. Eine ausschließlich fallende Verlegung der Entlüftungsleitung kann unter Umständen ungünstig sein, weil es beim Durchfahren von Kaltwasser dazu kommen kann, dass die Gasphase im Reduktionsmittelbehälter kontraktiert, so dass entweder Kaltwasser oder Kondensat von dem Reduktionsmittelbehälter angesaugt wird.

Erfindungsgemäß ist hingegen vorgesehen, einen ersten Leitungsabschnitt der Entlüftungsleitung fallend bzw. abschüssig auszuführen, um eine Abführung von Kondensat zu gewährleisten, einen zweiten Leitungsabschnitt zwecks Entlüftung steigend anzuordnen und einen dritten Leitungsabschnitt zur Kondensatdrainage vorzusehen. Wenigstens der dritte Leitungsabschnitt ist mittels eines Drainageventils verschlossen, welches das Eindringen von Wasser von außen beim Watvorgang zuverlässig verhindert. Der zweite, obere Leitungsabschnitt endet vorzugsweise in einem Bereich des Kraftfahrzeugs, welcher deutlich oberhalb des Bereichs liegt, welcher vom Wasser überflutet wird. Das betreffende Ende des Leitungsabschnittes kann beispielsweise in einem geschützten Karosseriebereich des Kfz angeordnet sein, so dass es keiner weiteren Schutzmaßnahmen gegen Wasser- oder Schmutzeintritt bedarf.

Bei einer bevorzugten Ausführungsform des Betriebsflüssigkeitsbehälters gemäß der Erfindung ist vorgesehen, dass die Länge des dritten Leitungsabschnitts so bemessen ist, dass das Drainageventil durch die Flüssigkeitssäule des angefallenen Kondensats betätigbar ist. Die Länge des nach unten führenden dritten Leitungsabschnitts ist darüber hinaus so gewählt, dass der Kondensatspiegel in dem Leitungsabschnitt immer einen hinreichenden Niveauabstand zu dem Druckausgleichselement einhält.

Besonders vorteilhaft ist es, wenn das Drainageventil unbelastet verschlossen ist.

Beispielsweise kann das Drainageventil wenigstens einen flexiblen und/oder federbelasteten Ventilkörper aufweisen, dessen hydraulisch wirksame Flächen so bemessen sind, dass ein von außen ansteigender Flüssigkeitsspiegel die Schließkraft verstärkt und dass eine Kondensatdrainage auf Grund eines von innen ansteigenden Flüssigkeitsspiegels nur erfolgt, wenn sich das Drainageventil oberhalb des Watspiegels befindet.

Das Drainageventil kann beispielsweise als so genanntes Pilzventil ausgebildet sein. Anstelle eines Pilzventils können als Drainageventil auch anders ausgebildete Rückschlagventile vorgesehen sein.

Eine bevorzugte Ausführungsform des Betriebsflüssigkeitsbehälters gemäß der Erfindung wird nachstehend anhand eines in den Zeichnungen dargestellten Ausführungsbeispiels erläutert. Obwohl die bevorzugte Ausführungsform des Betriebsflüssigkeitsbehälters gemäß der Erfindung ein Reduktionsmittelbehälter ist, kann dieser im Rahmen der Erfindung auch andere Ausgestaltungen aufweisen, beispielsweise als Behälter für Waschflüssigkeit oder als Kraftstoffbehälter.

Es zeigen:
- Figur 1: eine schematische Ansicht des Reduktionsmittelbehälters gemäß der Erfindung im eingetauchten Zustand,
- Figur 2: eine vergrößerte Ansicht des Ausschnitts II in Figur 1,
- Figur 3: eine vergrößerte Schnittansicht des in Figur 1 eingezeichneten Ausschnitts III, wobei sich das Drainageventil in geschlossener Stellung befindet und
- Figur 4: eine der Figur 3 entsprechende Ansicht bei geöffnetem Drainageventil.

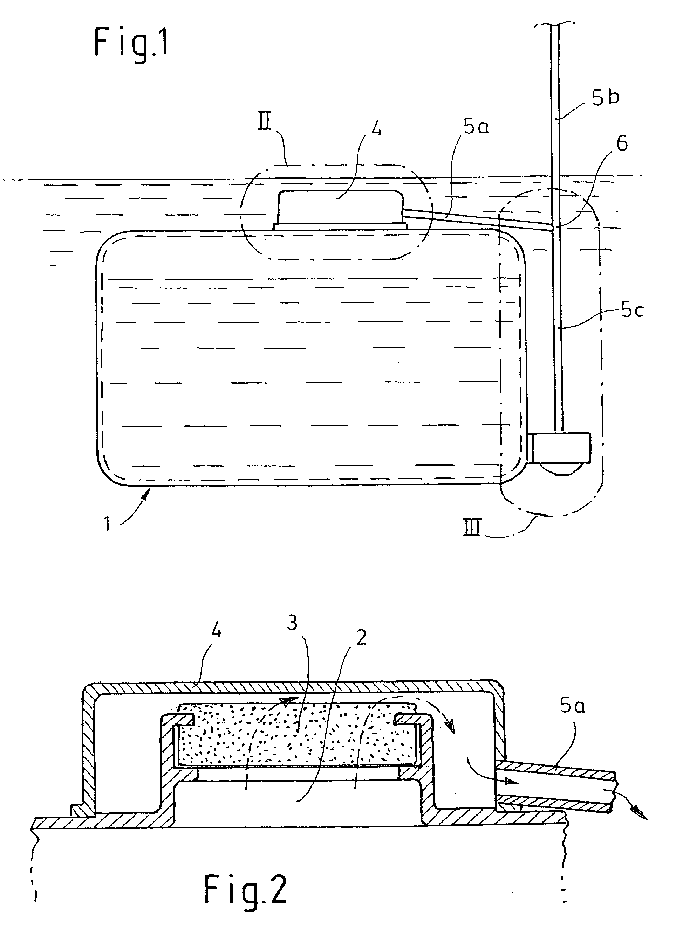

Der Reduktionsmittelbehälter 1, wie er in Figur 1 dargestellt ist, kann aus einem beliebigen Material bestehen und in beliebiger Art und Weise gefertigt worden sein. Vorzugsweise besteht der Reduktionsmittelbehälter 1 jedoch aus thermoplastischem Kunststoff und wurde durch Extrusionsblasformen erhalten. Dieser kann beispielsweise im hinteren Bereich der Karosserie eines Kfz verdeckt oder im Motorraum eines Kfz angeordnet sein. Der Reduktionsmittelbehälter 1 dient der Aufnahme eines in wässriger Lösung vorliegenden Harnstoffs, welcher vor dem so genannten SCR-Katalysator in den Abgasstrang des Kfz eingespritzt wird. Aus der Harnstoff-Wasserlösung wird durch eine Hydrolysereaktion Ammoniak und Kohlendioxid erzeugt. Das Ammoniak kann in dem SCR-Katalysator bei entsprechender Temperatur eine Reduktion der Stickoxide im Abgas bewirken.

Wie dies insbesondere den Figuren zu entnehmen ist, ist auf der in Einbaulage oberen Seite des Reduktionsmittelbehälters 1 eine zentrale Be- und Entlüftungsöffnung 2 vorgesehen, welche mit einem Druckausgleichselement 3 verschlossen ist. Das Druckausgleichselement 3 kann beispielsweise als Verschlusskörper in Form einer porösen, gesinterten Platte ausgebildet sein. Der poröse Sinterkörper kann beispielsweise aus einem UHDPE (ultra high density polyethylene) ausgebildet sein, der oleophobisiert und/oder hydrophobisiert ist. Dieser ist gasdurchlässig, jedoch flüssigkeitsundurchlässig.

Das Druckausgleichselement 3 ist von einem Entlüftungshut 4 in Form einer ein Gehäuse bildenden Kappe umschlossen. An den Entlüftungshut 4 ist eine Entlüftungsleitung 5a, 5b, 5c angeschlossen. An dieser Stelle sei angemerkt, dass übrige Funktionselemente des Reduktionsmittelbehälters 1 aus Vereinfachungsgründen nicht dargestellt sind. Der Reduktionsmittelbehälter 1 umfasst wenigstens eine Einfüllöffnung, an die beispielsweise ein Einfüllstutzen angeschlossen sein kann. Zusätzlich können Mittel zur Befüllentlüftung sowie Mittel zur Füllstandsbegrenzung bei der Befüllung vorgesehen sein.

Die Entlüftungsleitung 5 umfasst insgesamt drei Leitungsabschnitte 5a, 5b und 5c, wobei ein erster Leitungsabschnitt 5a in Bezug auf die etwa waagerechte Einbaulage des Reduktionsmittelbehälters 1 bzw. in Bezug auf den sich in diesem einstellenden Flüssigkeitsspiegel abschüssig angeordnet ist, wie dies insbesondere aus Figur 1 ersichtlich ist. Der erste Leitungsabschnitt 5a der Entlüftungsleitung 5 erstreckt sich in etwa gradlinig, d. h. ohne Bildung eines Siphons bis zu einer Verzweigung 6, wo sich die Entlüftungsleitung 5 in einen zweiten steigenden Leitungsabschnitt 5b und einen dritten fallenden Leitungsabschnitt 5c verzweigt. Der zweite und der dritte Leitungsabschnitt 5b und 5c der Entlüftungsleitung setzten sich jeweils in entgegengesetzte Richtung nach oben bzw. nach unten fort. Die Begriffe "oben" und "unten" beziehen sich jeweils auf die Einbaulage des Reduktionsmittelbehälters 1 im Kfz. Der Begriff "oben" bezeichnet eine Richtung entgegen der Schwerkraft, wohingegen der Begriff "unten" die Schwerkraftrichtung bezeichnet.

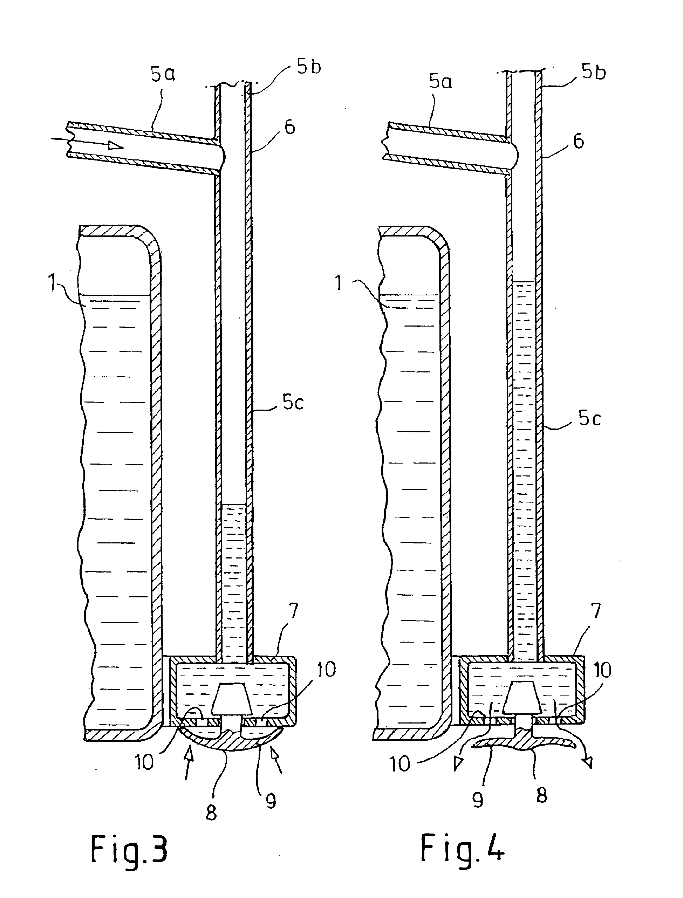

Es wird nunmehr Bezug genommen auf die Figuren 3 und 4, die jeweils eine vergrößerte Schnittansicht der Verzweigung 6 und des dritten Leitungsabschnittes 5c der Entlüftungsleitung 5 zeigen. Der dritte Leitungsabschnitt 5c der vorwiegend der Drainage der Entlüftungsleitung 5 dient, mündet an seinem unteren Ende in ein Ventilgehäuse 7, welches mittels eines Pilzventils 8 verschlossen ist. Das Pilzventil 8 umfasst einen flexiblen Ventilkörper 9, der zwei Drainageöffnungen 10 des Ventilgehäuses 7 verschließt. Das als Pilzventil 8 ausgebildete Drainageventil ist bei nicht belastetem Ventilkörper 9 verschlossen. Sammelt sich nun beim Betrieb des Kfz in der Entlüftungsleitung 5 Kondensat an, so wird das Kondensat schwerkraftbedingt zunächst durch den ersten abschüssigen Leitungsabschnitt 5a bis zur Verzweigung 6 gelangen, von dort wird das Kondensat in den dritten, sich senkrecht nach unten erstreckenden Leitungsabschnitt 5c gelangen, wo es sich zunächst einmal ansammelt. Die Länge des dritten Leitungsabschnitts 5c ist so bemessen, dass sich eine beachtliche Menge an Kondensat ansammeln kann, ohne dass diese über das höchste Füllstandsniveau innerhalb des Reduktionsmittelbehälters 1 ansteigt. Die hydraulisch wirksamen Flächen des Ventilkörpers 9 sowie dessen Flexibilität sind so bemessen, dass die in dem Leitungsabschnitt 5c ansteigende Kondensatsäule ein Öffnen des Ventilkörpers 9 bewirken kann, wie dies in Figur 4 dargestellt ist, und zwar bevor die Kondensatsäule die Verzweigung 6 erreichen kann. Es erfolgt daraufhin eine zumindest teilweise Entleerung des Leitungsabschnitts 5c gegen die Schließkraft des Ventilkörpers 9. Wird der Reduktionsmittelbehälter 1 in der gezeigten Einbausituation in Flüssigkeit (Wasser) getaucht, so bewirkt der hydrostatische Druck der von außen einwirkenden Flüssigkeit eine Verstärkung der Schließkraft des Ventilkörpers 9, so dass eine Entleerung des dritten Leitungsabschnitts 5c nun nicht mehr möglich ist. Dabei wird zuverlässig verhindert, dass Flüssigkeit (Wasser) von außen in die Entlüftungsleitung 5 eindringt.

Das obere nicht dargestellte Ende der Entlüftungsleitung 5 ist in einem Bereich angeordnet, der nicht von Wasser überflutbar ist. Dieses Ende der Leitung kann in einem "geschützten" Karosseriebereich mit der Atmosphäre kommunizieren. Je nach Anordnung sind keine weiteren Schutzmaßnahmen gegen Eindringen von Wasser oder Schmutz erforderlich.

Der dritte Leitungsabschnitt 5c der Entlüftungsleitung muss nicht notwendigerweise senkrecht nach unten geführt sein, dieser kann auch schräg verlaufend angeordnet sein, der dritte Leitungsabschnitt 5c ist allerdings vorteilhafterweise ohne die Bildung von Schleifen oder Siphons verlegt.

Der erste Leitungsabschnitt 5a ist bei dem beschriebenen Ausführungsbeispiel in einem Winkel von signifikant weniger als 45° bezogen auf eine Horizontale schräg geführt. Die Erfindung ist so zu verstehen, dass der Neigungswinkel bzw. der Grad der Abschüssigkeit des ersten Leitungsabschnitts 5a je nach Einbausituation verschieden sein kann.

### Bezugszeichenliste

- 1: Reduktionsmittelbehälter
- 2: Be- und Entlüftungsöffnung
- 3: Druckausgleichselement
- 4: Entlüftungshut
- 5: Entlüftungsleitung
- 5a: erster Leitungsabschnitt
- 5b: zweiter Leitungsabschnitt
- 5c: dritter Leitungsabschnitt
- 6: Verzweigung
- 7: Ventilgehäuse
- 8: Pilzventil
- 9: Ventilkörper
- 10: Drainageöffnung

## Patentansprüche

1. Betriebsflüssigkeitsbehälter für ein Kfz, insbesondere Reduktionsmittelbehälter (1) zur Aufnahme eines flüssigen Reduktionsmittels zur katalytischen Abgasentstickung, umfassend wenigstens eine Einrichtung zur Entlüftung des Behälters, die mit wenigstens einem Druckausgleichselement (3) verschlossen ist, welches einen Gasaustausch zulässt, den Behälter jedoch flüssigkeitsdicht verschließt, und umfassend wenigstens eine Entlüftungsleitung (5), die mit dem Druckausgleichselement (3) kommuniziert, wobei die Entlüftungsleitung (5) in Einbaulage des Behälters wenigstens bis oberhalb des maximal zulässigen Watniveaus oberhalb des Behälters geführt ist und wobei die Entlüftungsleitung (5) wenigstens einen ersten abschüssigen Leitungsabschnitt (5a) aufweist, der sich in einen zweiten steigenden Leitungsabschnitt (5b) zur Entlüftung und in einen dritten fallenden Leitungsabschnitt (5c) zur schwerkraftbedingten Kondensatdrainage verzweigt, wobei wenigstens der dritte Leitungsabschnitt (5c) mittels eines Drainageventils verschlossen ist.

2. Betriebsflüssigkeitsbehälter nach Anspruch 1, **dadurch gekennzeichnet, dass** die Länge des dritten Leitungsabschnitts (5c) so bemessen ist, dass das Drainageventil durch die Flüssigkeitssäule des angefallenen Kondensats betätigbar ist.

3. Betriebsflüssigkeitsbehälter nach einem der Ansprüche 1 oder 2, **dadurch gekennzeichnet, dass** das Drainageventil unbelastet verschlossen ist.

4. Betriebsflüssigkeitsbehälter nach einem der Ansprüche 1 bis 3, **dadurch gekennzeichnet, dass** das Drainageventil wenigstens einen flexiblen und/oder federelastischen Ventilkörper (9) aufweist, dessen hydraulisch wirksame Flächen so bemessen sind, dass ein von außen ansteigender Flüssigkeitsspiegel die Schließkraft verstärkt und dass eine Kondensatdrainage auf Grund eines von innen ansteigenden Flüssigkeitsspiegels nur erfolgt, wenn sich das Drainageventil außerhalb des Watspiegels befindet.

## Claims

1. An operating-liquid tank for a motor vehicle, in particular a reducing agent tank (1) for receiving a liquid reducing agent for catalytic denitrification of exhaust gas, comprising at least one device for venting the tank, which is closed by at least one pressure-equalising element (3) which permits a gas exchange but closes the tank in liquid-tight manner, and comprising at least one vent line (5) which communicates with the pressure-equalising element (3), wherein the vent line (5) is guided at least to a point above the maximum permissible fording level above the tank when the tank is in the installed position and wherein the vent line (5) has at least one first sloping line portion (5a) which branches into a second ascending line portion (5b) for venting and into a third descending line portion (5c) for condensate drainage by gravity, wherein at least the third line portion (5c) is closed by means of a drainage valve.

2. An operating-liquid tank according to Claim 1, **characterised in that** the length of the third line portion (5c) is dimensioned so that the drainage valve can be actuated by the liquid column of the accrued condensate.

3. An operating-liquid tank according to one of Claims 1 and 2, **characterised in that** the drainage valve is closed in an unloaded state.

4. An operating liquid tank according to one of Claims 1 to 3, **characterised in that** the drainage valve has at least one flexible and/or resilient valve body (9) whereof the hydraulically active surfaces are dimensioned so that a rising liquid level from the outside intensifies the closing force and **in that** condensate drainage as a result of a rising liquid level from the inside only takes place when the drainage valve is located outside the fording level.

## Revendications

1. Conteneur de liquide de fonctionnement pour un véhicule automobile, en particulier conteneur de substance de réduction (1) destiné à recevoir une substance de réduction liquide destinée à la réduction des émissions d'oxydes azotés des gaz d'échappement par catalyse, comprenant au moins un dispositif pour la mise à l'atmosphère du conteneur qui est fermé au moyen d'au moins un élément de compensation de pression (3) qui permet un échange des gaz, mais ferme le conteneur de façon étanche aux liquides, et comprenant au moins une conduite de mise à l'atmosphère (5) qui communique avec l'élément de compensation de pression (3), dans lequel la conduite de mise à l'atmosphère (5), dans la situation d'installation du conteneur, s'étend au moins jusqu'au-dessus du niveau de gué maximal autorisé au-dessus du conteneur et dans lequel la conduite de mise à l'atmosphère (5) présente au moins une première section de conduite inclinée (5a) qui se divise dans un embranchement entre une deuxième section de conduite montante (5b) destinée à la mise à l'atmosphère et une troisième section de conduite descendante (5c) destinée au drainage du condensat par gravité, au moins la troisième section de conduite (5c) étant fermée au moyen d'une soupape de drainage.

2. Conteneur de liquide de fonctionnement selon la revendication 1, **caractérisé en ce que** la longueur de la troisième section de conduite (5c) est calculée de telle sorte que la soupape de drainage peut être actionnée par la colonne de liquide du condensat recueilli.

3. Conteneur de liquide de fonctionnement selon l'une des revendications 1 ou 2, **caractérisé en ce que** la soupape de drainage est fermée lorsqu'elle ne subit pas de charge.

4. Conteneur de liquide de fonctionnement selon l'une des revendications 1 à 3, **caractérisé en ce que** la soupape de drainage présente au moins un corps de soupape flexible et/ou à déformation (9) dont les surfaces actives hydrauliquement sont calculées de telle sorte qu'un niveau de liquide augmentant depuis l'extérieur augmente la force de fermeture et qu'un drainage du condensat en raison d'un niveau de liquide augmentant depuis l'intérieur est uniquement réalisé lorsque la soupape de drainage se trouve en dehors du niveau de gué.
